Europäisches Patentamt

European Patent Office

Office européen des brevets

(19)

(11) Publication number: **0 375 456**
**A2**

(12) **EUROPEAN PATENT APPLICATION**

(21) Application number: 89313511.1

(22) Date of filing: 22.12.89

(51) Int. Cl.⁵ **G06F 15/16**

(30) Priority: 22.12.88 US 288397

(43) Date of publication of application:
**27.06.90 Bulletin 90/26**

(84) Designated Contracting States:
**DE FR GB IT**

(71) Applicant: **International Business Machines
Corporation
Old Orchard Road
Armonk, N.Y. 10504(US)**

(72) Inventor: **Heyen, John Gary
1747 Conrad Circle
Carrollton Texas(US)**
Inventor: **Kasiraj, Chander
2133 Aspenwood
Grapevine Texas 76051(US)**
Inventor: **Wolf, Timothy James
2621 Cummings
Bedford Texas 76021(US)**

(74) Representative: **Bailey, Geoffrey Alan
IBM United Kingdom Limited Intellectual
Property Department Hursley Park
Winchester Hampshire SO21 2JN(GB)**

(54) **Method for managing an electronic mail basket service.**

(57) A method is disclosed for managing an electronic mail basket service within a distributed computing system. A master electronic mail basket (42) is established at each server machine (18)for each user served by that server machine within the distributed computing systems. A duplicate or "shadow" electronic mail basket (44) corresponding to the master electronic mail basket is then established at each requester machine (16). In this manner a user may quickly access his or her mail basket without the retrieval delay necessary to establish a server machine connection and obtain the contents of the mail basket. Changes in either the master electronic mail basket or a corresponding shadow electronic mail basket are automatically and periodically reconciled whenever the server machine connection is available. In the event multiple users are permitted to access the same electronic mail basket, shadow electronic mail baskets are established for each of the multiple users and changes entered at any shadow electronic mail basket are automatically reconciled with the corresponding master electronic mail basket as well as with all other shadow electronic mail baskets which correspond thereto. In a preferred embodiment of the present invention, changes which occur in a shadow electronic mail basket automatically generate an audible and/or visual notification (48) to the user of the requester machine associated therewith.

Fig. 1

# METHOD FOR MANAGING AN ELECTRONIC MAIL BASKET SERVICE

This invention relates generally to computer networks and in particular to methods for transmitting electronic mail items or messages via computer networks. Still more particularly, the present invention relates to methods for permitting the manipulation and alteration of electronic mail items or messages which are accessible and alterable by multiple recipients.

The electronic mail is rapidly supplanting Post Office mail as a means for communicating between individuals. One significant advantage of electronic mail is that the transmission time associated with each electronic mail message is ordinarily only seconds, or fractions of a second, as compared to Post Office mail which ordinarily requires several days.

The mailing time associated with Post Office mail often causes significant delay in the conduct of business and has been largely ignored, and consequently tolerated, until the advent of Express Mail services and electronic mail. Currently, this widespread delay of business is identified as "float" and the minimizing or eliminating of this float has become one goal of business managers, efficiency experts and others hoping to increase societal productivity.

The widespread utilization and increased sophistication of electronic mail systems have given rise to a problem of continuity. It is now possible for multiple users to share designated electronic mail files or "baskets" and to alter or modify an individual mail item contained therein. This may not be a problem where there exists only one copy of a particular mail item; however, a system which utilizes only one copy of each electronic mail item rapidly becomes bogged down in retrieval delays when more than one user wishes to view that item. An attempt to solve this problem utilizing multiple copies of each electronic mail item located at various locations throughout the system can create problems when subsequent transmittal of a modified mail item causes substantial confusion due to variations in the message text which cannot be reconciled by conventional methods.

Viewed from one aspect the invention provides a method for managing an electronic mail basket service within a distributed computing system having at least one server machine and a plurality of requester machines, said method comprising the steps of:
establishing a master electronic mail basket at said at least one server machine for each user serviced by said at least one server machine within said distributed computing system;
establishing a shadow electronic mail basket corresponding to said master electronic mail basket at each requester machine for each user within said distributed computing system; and
automatically reconciling changes made at a shadow electronic mail basket with said corresponding master electronic mail basket.

Viewed from another aspect the invention provides a method for managing an electronic mail basket service within a distributed computing system having at least one server machine and a plurality of requester machines, said method comprising the steps of:
establishing a master electronic mail basket at said at least one server machine for each user serviced by said at least one server machine within said distributed computing system;
establishing a shadow electronic mail basket corresponding to said master electronic mail basket at each requester machine for each user within said distributed computing system; and
automatically reconciling changes made at a master electronic mail basket with said corresponding shadow electronic mail basket.

The invention provides a method whereby an electronic mail basket may be shared by multiple users by implementing a system which automatically reconciles modifications to an electronic mail item made by one user with copies of that mail item located at other locations.

The method of the present invention is utilized to establish a master electronic mail basket at each server machine for each user served by that server machine within a distributed computing system. A duplicate or "shadow" electronic mail basket corresponding to each master electronic mail basket is then established at each requester machine. In this manner a user may quickly access his or her mail basket without the retrieval delay necessary to establish a server machine connection and obtain the contents of a mail basket. Changes in either the master electronic mail basket or a corresponding shadow electronic mail basket are automatically and periodically reconciled whenever the server machine connection is available. In the event multiple users are permitted to access the same electronic mail basket, changes entered at any shadow electronic mail basket are automatically reconciled with the corresponding master electronic mail basket as well as all other shadow electronic mail baskets which correspond to that master electronic mail basket. In a preferred embodiment of the present invention, changes which occur in a shadow electronic mail basket automatically generate an audible and/or visual indication to the user of the requester machine associated therewith.

An embodiment of the invention will now be described, by way of example only, with reference to the accompanying drawings wherein:

Figure 1 depicts in a schematic/block diagram form the method of the present invention wherein a shadow electronic mail basket is established; and

Figure 2 depicts in schematic/block diagram form the method of the present invention wherein alterations to a mail item by an end user are reconciled with the master electronic mail basket.

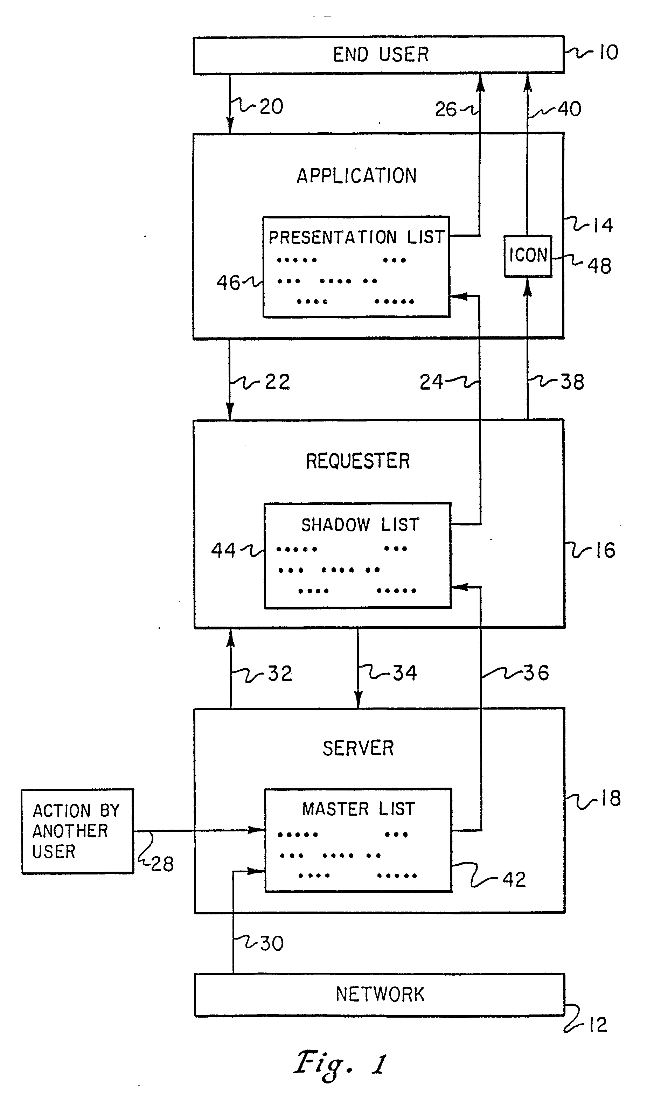

With reference now to the figures and in particular with reference to Figure 1, there is depicted, in a schematic/block diagram form, the method of the present invention wherein a duplicate or "shadow" electronic mail box may be utilized. As may be seen, an end user 10 is coupled to a distributed computing system via network 12. As those skilled in the art will appreciate, many different types of distributed computing systems are known. For example, multiple individual computers may be coupled together in a Local Area Network (LAN), or a plurality of Interactive Work Stations (IWS) may be coupled to a single host processor to form a distributed computing system.

As is illustrated, end user 10 is utilizing an application 14, which is suitable for the examination of electronic mail. Examples of such applications may include UNIX, produced by Bell Telephone Laboratories, or PROFS, produced by International Business Machines Corporation. Application 14 is preferably resident within a requester machine 16, which may be implemented with an Interactive Work Station (IWS) or an individual computer as discussed above. Next, requester machine 16 is coupled, via any suitable means, to server machine 18, which acts to provide electronic mail service to end user 10. Server machine 18 may be implemented utilizing a host processor or an individual computer. Finally, server machine 18 is coupled to network 12, which may Provide a method for coupling server machine 18 to other such machines in any manner well known in the art.

Still referring to Figure 1, a master electronic mail list 42 is depicted within server machine 18. In accordance with the method of the present invention, each master electronic mail list 42 includes all the electronic mail items addressed to a particular end user and may be augmented by additional electronic mail items being coupled to server machine 18 from network 12, as indicated at path 30. Additionally, as indicated at path 28, a second user may, in accordance with the method of the present invention, alter an electronic mail item contained within master electronic mail list 42. Of course, those skilled in the art should appreciate that path 28 will incorporate a second end user, a second application and a second requester machine, in the manner depicted within Figure 1.

Each alteration of master electronic mail list 42, whether an augmentation from network 12 or a modification from another user, causes an automatic notification signal 32 to be transmitted to the appropriate requester machine. Additionally, in accordance with an important feature of the present invention, each alteration of master electronic mail list 42 is periodically reconciled with a duplicate or "shadow" electronic mail list 44 which is established at requester machine 16. This reconciliation may take place at any time during which the server connection is available.

Referring now to application 14, another important feature of the present invention may be illustrated. As may be seen, end user 10 may elect to view his or her electronic mail basket by selecting an appropriate action within application 14, as illustrated by path 20. At this point, application 14 accesses shadow electronic mail list 44, as indicated at path 22. In response, requester machine 16 retrieves shadow electronic mail list 44 and returns it to application 14, as indicated at path 24, where it is placed within the presentation space of application 14, as presentation electronic mail list 46. Finally, the automatic notification signal transmitted from server machine 18 to requester machine 16 via path 32 is coupled to application 14 via path 38. Within application 14, the automatic notification signal is preferably utilized to initiate a notification to end user 10 by means of icon 48. As those skilled in the art will appreciate, icon 48 along with an associated tone generator may be utilized to provide a visual and an audible indication of this notification to end user 10, as indicated at path 40.

Upon reference to Figure 1, those skilled in the art will appreciate that the Applicants have provided a novel method whereby an end user may obtain quick access to his or her electronic mail box without the retrieval delay generally associated with the necessity of communicating with the source machine. Thus, the end user response time with regard to all mail basket actions is improved by providing a shadow electronic mail basket which is automatically and dynamically refreshed and reconciled by the server machine when the server machine connection is available. By off-loading mail basket usage to each individual end user's machine, this method permits multiple end users to access and alter individual mail items contemporaneously.

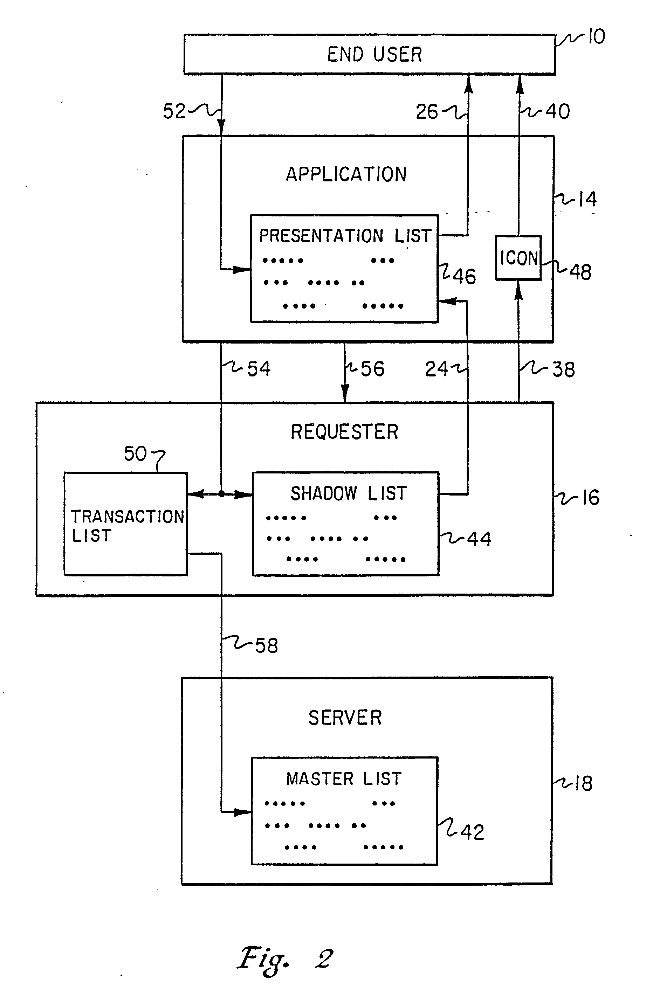

Referring now to Figure 2, there is illustrated, in a schematic/block diagram form, the method of the present invention wherein alterations to an individual mail item by an end user are reconciled with a master electronic mail list. As above, end user 10 and an associated requester machine 16

are coupled to a server machine **18**. Network **12** is not depicted within **Figure 2**. Additionally, as illustrated in both **Figure 1** and **Figure 2**, master electronic mail list **42** is contained within server machine **18**, shadow electronic mail list **44** is contained within requester machine **16** and is displayed as presentation electronic mail list **46** within the presentation space of application **14**.

The method of the present invention whereby alterations to a mail item contained within shadow electronic mail list **44** will now be illustrated. The process begins when end user **10** elects to alter an electronic mail item displayed within presentation electronic mail list **46** within the presentation space of application **14**, as illustrated by path **52**. Next, any alterations made within application **14** by end user **10** are entered into a transaction list **50**, as depicted at path **54**. Transaction list **50** is preferably utilized to update and alter the electronic mail item contained within shadow electronic mail list **44**, as directed by the actions of end user **10**.

The actions logged within transaction list **50** are also periodically utilized to reconcile those changes with the electronic mail item contained within master electronic mail list **42**. An important feature of the present invention is illustrated herein in that such reconciliation need only take place periodically, during those periods of time when the server machine connection is available. Finally, the altered mail item within shadow electronic mail list **44** is utilized to update presentation electronic mail list **46**, as displayed within the presentation space of application **14**.

In the manner disclosed herein, the method of the present invention permits multiple users to simultaneously alter identical mail items contained within each users' shadow electronic mail list, reconciling those changes with the master electronic mail list periodically at those times when the server machine connection is available. Of course, those ordinarily skilled in the art will appreciate that it may be necessary to incorporate a simple protocol to determine which alterations shall take place in the event of conflicting alterations and how the end users shall be notified in the event their selected alterations are not implemented. Additionally, the method of the present invention allows automatic notification to each user involved when changes are entered to his or her electronic mail list by another user or by the system.

While the invention has been particularly shown and described with reference to a preferred embodiment, it will be understood by those skilled in the art that various changes in form and detail may be made therein without departing from the scope of the invention.

## Claims

1. A method for managing an electronic mail basket service within a distributed computing system having at least one server machine (18) and a plurality of requester machines (16), said method comprising the steps of:
establishing a master electronic mail basket (42) at said at least one server machine for each user serviced by said at least one server machine within said distributed computing system;
establishing a shadow electronic mail basket (44) corresponding to said master electronic mail basket at each requester machine for each user within said distributed computing system; and
automatically reconciling changes made at a shadow electronic mail basket with said corresponding master electronic mail basket.

2. The method for managing an electronic mail basket service within a distributed computing system according to Claim 1 wherein more than one requester machine may access a common electronic mail basket and wherein changes at any shadow electronic mail basket are automatically reconciled with said master electronic mail basket corresponding thereto and each shadow electronic mail basket corresponding with said master electronic mail basket.

3. A method for managing an electronic mail basket service within a distributed computing system having at least one server machine (18) and a plurality of requester machines (16), said method comprising the steps of:
establishing a master electronic mail basket (42) at said at least one server machine for each user serviced by said at least one server machine within said distributed computing system;
establishing a shadow electronic mail basket (44) corresponding to said master electronic mail basket at each requester machine for each user within said distributed computing system; and
automatically reconciling changes made at a master electronic mail basket with said corresponding shadow electronic mail basket.

4. The method for managing an electronic mail basket service within a distributed computing system according to Claim 3 wherein more than one requester machine may access a common electronic mail basket and wherein changes at a master electronic mail basket are automatically reconciled with each corresponding shadow electronic mail basket.

5. The method for managing an electronic mail basket service within a distributed computing system according to any preceding claim, wherein said step of automatically reconciling changes made at a shadow electronic mail basket with said corresponding master electronic mail basket comprises the steps of:

entering each change made at a shadow electronic mail basket into a transaction log (50); and

periodically reconciling said transaction log with said master electronic mail basket during periodic communication between said server machine and said requester machine.

6. The method for managing an electronic mail basket service within a distributed computing system according to any preceding claim, further including the step of providing a notification to a user of a particular requester machine in response to said automatic reconciliation of changes made at said master electronic mail basket with said corresponding shadow electronic mail basket.

7. The method for managing an electronic mail basket service within a distributed computing system according to Claim 6 wherein said notification comprises a visible indication (48) to said user at said requester machine.

8. The method for managing an electronic mail basket service within a distributed computing system according to Claim 6 or 7 wherein said notification comprises an audible indication to said user at said requester machine.

9. The method for managing an electronic mail basket service within a distributed computing system according to any preceding claim, wherein said server machine comprises a host processor.

10. The method for managing an electronic mail basket service within a distributed computing system according to any preceding claim, wherein each of said plurality of requester machines comprises an interactive work station.

END USER — 10

20

26 — 40

APPLICATION — 14

PRESENTATION LIST

46

ICON — 48

22

24 — 38

REQUESTER — 16

SHADOW LIST

44

32

34 — 36

SERVER — 18

ACTION BY ANOTHER USER — 28

MASTER LIST

42

30

NETWORK — 12

*Fig. 1*

*Fig. 2*